# EUROPÄISCHE PATENTSCHRIFT

(11) **EP 2 257 362 B1**
(45) Veröffentlichungstag und Bekanntmachung des Hinweises auf die Patenterteilung: **23.11.2016**
(21) Anmeldenummer: 09726112.7
(22) Anmeldetag: 26.03.2009
(51) Int. Cl.: B01D 53/62, C04B 7/36

(54) **VERFAHREN UND ANLAGE ZUM HERSTELLEN VON ERZEUGNISSEN, BEI DEM KOHLENDIOXID FREIGESETZT WIRD**
PROCESS AND PLANT FOR PRODUCING PRODUCTS, IN WHICH CARBON DIOXIDE IS RELEASED
PROCÉDÉ ET INSTALLATION POUR LA FABRICATION DE PRODUITS, QUI LIBÈRENT DU DIOXYDE DE CARBONE

(30) Priorität: 27.03.2008 AT 4832008
(43) Veröffentlichungstag der Anmeldung: 08.12.2010
(73) Patentinhaber: Knoch, Kern & CO. KG, 9020 Klagenfurt (AT)
(72) Erfinder: WESNER, Wolfgang, A-1050 Wien (AT)
(74) Vertreter: Beer & Partner Patentanwälte KG
(86) Internationale Anmeldenummer: PCT/AT2009/000120
(87) Internationale Veröffentlichungsnummer: WO 2009/117753

(56) Entgegenhaltungen:
- EP-A- 1 142 629
- WO-A-2007/106372
- WO-A-2009/065031
- FR-A- 2 863 911
- US-A1- 2004 213 705
- US-A1- 2006 185 560

## Beschreibung

Die Erfindung betrifft ein Verfahren und eine Vorrichtung mit den Merkmalen der unabhängigen Ansprüche.

Insbesondere betrifft die Erfindung eine Anlage und ein Verfahren zum Herstellen von Zement und/oder von gebranntem Kalk. Sowohl beim Herstellen von Zement als auch beim Herstellen von gebranntem Kalk wird aus dem in den Rohstoffen gebundenen Karbonat Kohlendioxid in die Atmosphäre freigesetzt.

Beim Herstellen von Zement und von gebranntem Kalk werden derzeit je Tonne Produkt (Zement/Kalk) 0,2 bis 0,3 Tonnen Kohlendioxid aus den beim Herstellen verwendeten Brennstoffen und 0,4 bis 0,5 Tonnen Kohlendioxid aus dem Rohstoff (Karbonatanteil der Rohstoffe) freigesetzt.

Dieses Freisetzen nicht unerheblicher Mengen von Kohlendioxid ist, im Hinblick auf die allgemeinen Bestrebungen der Klimaerwärmung durch Vermeiden von Kohlendioxid-Emissionen entgegenzuwirken, unerwünscht. Zusätzlich muss die Emission von Kohlendioxid als Kostenfaktor von zunehmender Bedeutung betrachtet werden.

Umgesetzte Konzepte zur Reduktion der Kohlendioxid-Emissionen betreffen bislang ausschließlich die Optimierung des Energiebedarfes, bzw. den Ersatz von fossilen Brennstoffen durch Sekundärbrennstoffe.

So beschreibt z.B. JP 2002255601 A ein Verfahren zum optimierten Verbrennen von festem Abfall als Ersatz von fossilen Brennstoffen. Vielerorts ersetzen bereits energiereiche Abfälle einen Anteil des Kohle-, Öl- oder Gasbedarfs.

Alternative Strategien sehen den Ersatz von Zementklinker durch andere Hauptbestandteile nicht-karbonatischen Ursprungs vor. Die FR-A-2 669 918, JP 2003095711 A beschreiben den Ersatz für gebrannten Beton bestehend aus Aluminium- und Siliziumkomponenten.

Das Binden von beim Brennprozess freigesetztem Kohlendioxid ist technisch machbar und wird diskutiert. Neben den erheblichen Kosten dieser Verfahren ist vor allem die Frage der Endlagerung des Kohlendioxides unbefriedigend. Das Entfernen von Kohlendioxid aus einem Abgasstrom erfolgt dabei entweder durch Ausfrieren oder durch Absorption in Laugen. Die DE-A-4 303 174, DE-A-101 55 936, EP-A-0 953 748 beschreiben geschlossene Verbrennungssysteme mit Reinsauerstoffzufuhr und Kohlendioxid-Kühlfalle für Kraftwerke.

Die WO 02 083591 A beschreibt einen kohlendioxidemissionsfreien Betrieb eines Zementwerkes. Das entstehende Kohlendioxid wird an Kalziumchlorid (oder andere Metalloxide/-chloride aus Meersalz oder Abfällen) gebunden. So entsteht Kalziumkarbonat, das wieder im Prozess verarbeitet werden soll. Im Ergebnis wird hierbei aus Kalziumchlorid Kalziumoxid erzeugt, das Kohlendioxid bleibt im Kreislauf. Nachteil dieser Variante ist, dass die üblicherweise genutzten Karbonatgesteine auf diese Weise nicht mehr verarbeitet werden können und dass große Mengen Metallsalze zur Verarbeitung angeliefert werden müssten. Auch die Verwertung des entstehenden Chlorides muss als problematisch angesehen werden.

Ein Verfahren der eingangs genannten Gattung ist aus der FR 2 863 911 A bekannt. Bei diesem bekannten Verfahren wird die Umwandlung von Kohlendioxid in Ameisensäure und Oxalsäure gemäß dem Reaktionsschemata auf Seite 2 dieses Dokumentes beschrieben. Bei dem aus der FR 2 863 911 A bekannten Verfahren wird eine Arbeitsweise angewendet, bei der Kohlendioxid in flüssiger Phase angereichert werden soll. In einem weiteren Schritt soll das Kohlendioxid in der angereicherten Lösung elektrolytisch zu Oxalatanion oder Formiatanion reduziert werden, wobei diese Anionen als freie Säure oder als Salz (Oxalat bzw. Formiat) vorliegen können. Schließlich soll die gebildete Oxalsäure/Ameisensäure ausgefällt werden, indem ein Salz gebildet wird, wobei Salze mit Metallen, wie beispielsweise Kalzium oder Magnesium, genannt sind.

Der Erfindung liegt die Aufgabe zu Grunde, ein Verfahren und eine Anlage zum Durchführen desselben vorzuschlagen, mit welchen Kohlendioxid-Emissionen beseitigt oder doch erheblich verringert sind.

Gelöst wird diese Aufgabe erfindungsgemäß mit einem Verfahren, welches die Merkmale von Anspruch 1 aufweist und mit einer Anlage, welche die Merkmale des unabhängigen auf die Anlage gerichteten Anspruchs aufweist.

Bevorzugte und vorteilhafte Ausgestaltungen der Erfindung sind Gegenstand der Unteransprüche.

Bei dem Verfahren gemäß der Erfindung, das insbesondere zum Herstellen von Zement und/oder gebranntem Kalk gedacht ist, erfolgt kein Freisetzen von Kohlendioxid, das im Kalk als Karbonat gebunden ist, in die Atmosphäre.

Vorteilhaft ist es bei der Erfindung, dass das beim Verarbeiten von karbonathaltigem Gestein zu Zement und/oder gebranntem Kalk freigesetzte fossile Kohlendioxid nicht in die Atmosphäre gelangt, sondern wenigstens zu einem Teil in eine Verbindung übergeführt wird, die entweder endgelagert oder anderweitig verwendet werden kann.

Bei der Erfindung wird das beim Verarbeiten von karbonathaltigem Gestein, das beispielsweise zum Herstellen von Zement oder von Kalk verwendet wird, entstehende Kohlendioxid in Kalziumoxalat übergeführt, das als Betonzuschlagstoff Verwendung finden kann und/oder einfach endgelagert wird, wobei es auch in diesem Fall eine Kohlendioxidsenke ist.

Im Einzelnen erlaubt es die erfindungsgemäße Verfahrensführung vorteilhaft, dass eine künstliche Kohlendioxidsenke vor Ort geschaffen wird.

Bei der Erfindung wird dies durch die Synthese von Oxalsäure bzw. Oxalaten verwirklicht. Oxalsäure bildet mit Kalzium eine äußerst stabile Verbindung, das Kalziumoxalat. Die Wasserlöslichkeit von Kalziumoxalat ist geringer als die von Kalziumkarbonat, so dass die Verbindung beispielsweise geeignet ist, daraus Sand und/oder Steine herzustellen.

Kalziumoxalat oder eine Mischung von Kalziumoxid und Kalziumoxalat kann auch als Bindemittel oder als Zusatz zu hydraulischen Bindemitteln eingesetzt werden.

Die erfindungsgemäß angestrebte Senke für das karbonatische Kohlendioxid (fossiles Kohlendioxid) und für das beim Verbrennen von fossilen Energieträgern beim Herstellen von gebranntem Kalk und/oder Zement entstehende Kohlendioxid ist somit das Endprodukt Zement bzw. Beton.

Vorteilhaft bei der Erfindung ist auch, dass, im Gegensatz zu Kalziumkarbonat, das in der Lage ist, ein Mol Kohlendioxid je Mol Kalzium zu binden, Kalziumoxalat 2 Mol Kohlenstoff je Mol Kalzium in einer äußerst stabilen Form bindet. Dieser Umstand erlaubt es, neben den Oxalaten auch weiterhin die klassischen Oxide herzustellen und auch das aus den Brennstoffen anfallende Kohlendioxid zu binden.

Im Rahmen der Erfindung wird das Kalziumoxalat über Kohlenmonoxid hergestellt.

Aus der EP 0 307 382 A ist es an sich bekannt, in einem Drehrohrofen, wie er in der Zementindustrie verwendet wird, das Verfahren so zu führen, dass aus dem gebildeten Kohlendioxid kontinuierlich Kohlenmonoxid hergestellt wird.

Bei dem Verfahren nach der Erfindung kann das Kohlenmonoxid entweder - unter Nutzung des Boudouard-Gleichgewichts - bereits bei dem Brennvorgang erzeugt werden, oder es wird in einer Nachverbrennungsstufe aus Kohlendioxid Kohlenmonoxid hergestellt. Die dabei ablaufende Reaktion ist folgende:

CO₂ + C ⇄ 2 CO

In einer Ausführungsform des erfindungsgemäßen Verfahrens wird aus dem gebildeten Kohlenmonoxid durch Einleiten desselben in eine (gesättigte) Lösung von Natriumformiat in Natronlauge bei einer Temperatur in der Gegend von 210° C unter hohem Druck Natriumformiat hergestellt. Dies läuft nach folgender Reaktionsgleichung ab:

NaOH + CO → HCOONa

Es reagiert also Natriumhydroxid mit Kohlenmonoxid zu Natriumformiat.

Das gebildete Natriumformiat kann durch rasches Erhitzen auf eine Temperatur in der Größenordnung von 360° C in Natriumoxalat übergeführt werden. Dabei läuft folgende Reaktion ab:

2 HCOONa → NaOOC-COONa + H₂

Bei dieser Reaktion entsteht Wasserstoff, der in einer Ausführungsform der Erfindung wieder verbrannt werden kann, so dass Energie gespart wird.

Das nach obigem Schritt erhaltene Natriumoxalat kann in eine schwer lösliche Verbindung übergeführt werden, indem es mit Kalziumhydroxid umgesetzt wird, um das schwer lösliche Kalziumoxalat zu bilden:

Na₂C₂O₄ + Ca(OH)₂ - CaC₂O₄ + 2 NaOH

Die dabei entstehende Natronlauge kann wieder zum Herstellen von Natriumformiat verwendet werden, indem sie, wie oben angegeben, mit Kohlenmonoxid umgesetzt wird.

Das erwähnte Verwenden von beim erfindungsgemäßen Verfahren entstehendem Kalziumoxalat als Betonzuschlagsstoff ist ein Beispiel. Die bei dem erfindungsgemäßen Verfahren entstehenden Zwischenprodukte wie Natriumformiat oder Natriumoxalat können in der chemischen Industrie für Synthesen (z.B. Polymersynthesen) Verwendung finden.

Weitere Einzelheiten und Merkmale der Erfindung ergeben sich aus der nachstehenden Beschreibung von Ausführungsbeispielen von Anlagen, die zum Durchführen des erfindungsgemäßen Verfahrens geeignet sind. Es zeigt
- Fig. 1: schematisch eine erste Ausführungsform einer Anlage und
- Fig. 2: schematisch eine zweite Ausführungsform.

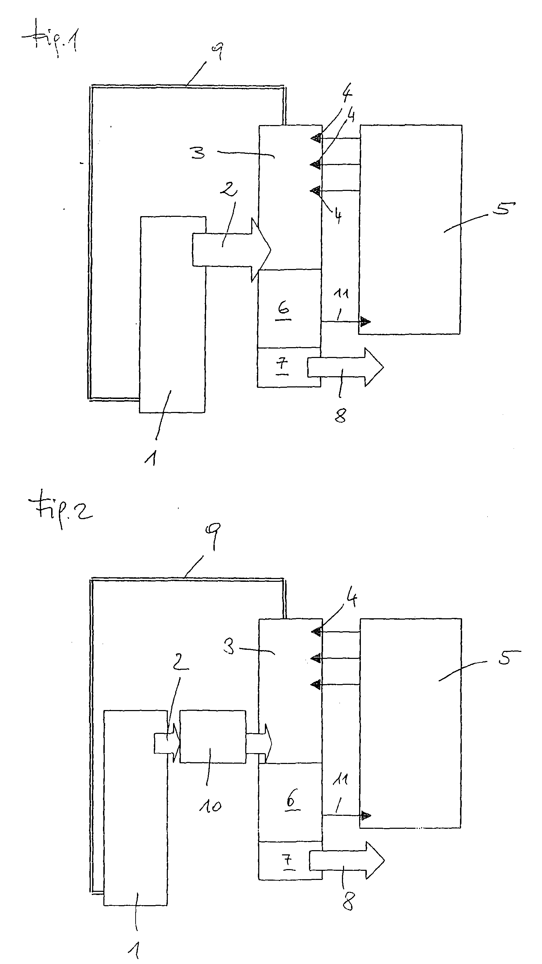

Die in Fig. 1 gezeigte Anlage umfasst einen Zementofen 1 (z.B. Drehrohrofen). In dem Drehrohrofen wird das Verfahren so geführt, dass Kohlendioxid, das beim Brennen von Zement-Rohstoffen aus den karbonathaltigen Gesteinsanteilen und/oder von Kalk gebildet wird, noch im Ofen 1 nach dem Boudouard-Gleichgewicht in Kohlenmonoxid übergeführt wird.

Das gebildete Kohlenmonoxid (CO) wird über eine Leitung 2 in einen Wäscher 3 geleitet. In dem Wäscher 3 wird über Düsen 4 aus einem Vorratsbehälter 5 eine gesättigte Lösung von Natriumformiat in Natriumhydroxid eingesprüht. Im unteren Bereich des Wäschers 3 ist eine Sedimentationszone 6 vorgesehen. Von der Sedimentationszone 6 geht eine Leitung 11 aus, über die mit Natriumformiat gesättigte NatriumhydroxidLösung in den Vorratstank 5 zurückgeführt wird. Am unteren Ende des Wäschers 3 ist ein Bereich 7 vorgesehen, in dem sich das ausgefällte und abgesetzte Natriumformiat sammelt, das dann durch einen Auslass 8 abgezogen wird.

Schließlich ist noch eine Leitung 9 vorgesehen, über die aus dem Wäscher 3 Restgas in den Zementofen 1 (Drehrohrofen) rückgeführt wird.

Bei der in Fig. 2 gezeigten Ausführungsform wird das Verfahren im Zementofen 1 (Drehrohrofen) so geführt, dass aus ihm kein Kohlenmonoxid sondern vorwiegend Kohlendioxid austritt.

Dieses Kohlendioxid wird in einer Erwärmungseinheit 10 nach dem oben erwähnten Boudouard-Gleichgewicht in Kohlenmonoxid übergeführt. Das so gebildete Kohlenmonoxid wird aus der Erwärmungseinheit 10 in den Wäscher 3 geleitet. Im übrigen entspricht die in Fig. 2 gezeigte Anlage der Anlage von Fig. 1.

Die anhand der Fig. 1 und 2 beschriebenen Anlagen können wie folgt betrieben werden:
Im Zementofen 1 wird entweder eine derartige Betriebsweise gewählt, dass direkt Kohlenmonoxid abgezogen werden kann, oder Kohlendioxid wird unter Beibehaltung der für die Zementherstellung üblichen Betriebsparameter aus dem Zementofen 1 abgezogen und in der Nachverbrennungs- bzw. Erwärmungseinheit 10 in Kohlenmonoxid umgewandelt. Das so gewonnene Kohlenmonoxid enthaltende Abgas wird in den Wäscher 3 geleitet, wo eine wässrige, nahezu gesättigte Lösung von Natriumformiat in Natronlauge (NaOH) aus dem Vorratsbehälter 5 über Düsen 4 eingesprüht wird. Der Vorratsbehälter 5 kann gleichzeitig als Lösebehälter für das Herstellungen der Natronlauge dienen. Über die Leitung 9 wird Restgas in den Verbrennungsraum des Zementofens 1 rückgeführt. Im Sedimentationsbereich 6 trennt sich auf Grund des überschrittenen Löslichkeitsproduktes kristallines Natriumformiat ab, das am Boden 7 des Wäschers 3 entnommen werden kann (z.B. über einen Schrägbettklärer). Das so gewonnene Natriumformiat wird anschließend getrocknet und erhitzt, wodurch Natriumoxalat entsteht. Das so erhaltene Natriumoxalat wird mit gebranntem Kalk oder direkt mit ungebranntem Kalk zur Reaktion gebracht, wobei das schwer lösliche Kalziumoxalat entsteht und die vorher eingesetzte Natronlauge wieder frei wird. Das Gleichgewicht liegt wegen der schlechten Löslichkeit des Kalziumoxalates ganz beim Produkt Kalziumoxalat. Während die Natronlauge wieder dem Behälter 5 zugeführt wird, wird das Kalziumoxalat weiterverwendet, z.B. Zement zugemischt.

## Patentansprüche

1. Verfahren zum thermischen Behandeln karbonathaltiger Rohstoffe, bei dem Kohlendioxid entsteht (Kalzination), insbesondere zum Herstellen von Zement und/oder gebranntem Kalk, bei dem anfallendes Kohlendioxid in eine in Wasser schwer lösliche Verbindung, insbesondere ein schwer lösliches Salz, übergeführt wird, **dadurch gekennzeichnet, dass** Kohlendioxid in Kohlenmonoxid übergeführt wird und dass Kohlenmonoxid zunächst in ein Formiat und dieses dann in ein Oxalat übergeführt wird.

2. Verfahren nach Anspruch 1, **dadurch gekennzeichnet, dass** Kohlenmonoxid durch Umsetzen mit Natronlauge in Natriumformiat übergeführt wird.

3. Verfahren nach Anspruch 2, **dadurch gekennzeichnet, dass** Natriumformiat durch thermisches Behandeln in Natriumoxalat und Wasserstoff übergeführt wird.

4. Verfahren nach einem der Ansprüche 1 bis 3, **dadurch gekennzeichnet, dass** Kohlenmonoxid zum Bilden von Natriumformiat mit Natronlauge, die mit Natriumformiat gesättigt ist, in Berührung gebracht wird.

5. Verfahren nach Anspruch 4, **dadurch gekennzeichnet, dass** das aus der mit Natriumformiat gesättigten Natronlauge ausfallende Natriumformiat, das durch Umsetzen von Kohlenmonoxid mit Natronlauge gebildet wurde, abgetrennt und die verbleibende, mit Natriumformiat gesättigte Natronlauge in den Kreislauf rückgeführt wird.

6. Verfahren nach einem der Ansprüche 1 bis 5, **dadurch gekennzeichnet, dass** das thermische Behandeln von karbonathaltigen Rohstoffen unter Bilden von Kohlenmonoxid geführt wird.

7. Verfahren nach einem der Ansprüche 1 bis 6, **dadurch gekennzeichnet, dass** das thermische Behandeln von karbonathaltigen Rohstoffen unter Bilden von Kohlendioxid geführt wird, und dass das gebildete Kohlendioxid in einer Nachverbrennungsstufe in Kohlenmonoxid übergeführt wird.

8. Verfahren nach einem der Ansprüche 1 bis 7, **dadurch gekennzeichnet, dass** Kohlenmonoxid in einem Wäscher mit einer mit Natriumformiat gesättigten Natriumhydroxidlösung in Berührung gebracht wird.

9. Anlage zum thermischen Behandeln von karbonathaltigem Rohstoff, insbesondere zum Herstellen von Zement und gebranntem Kalk, **dadurch gekennzeichnet, dass** der Ausgang (2) eines Ofens (1) zum thermischen Behandeln von karbonathaltigem Rohstoff, insbesondere eines Drehrohrofens zum Herstellen von Zement und/ oder gebranntem Kalk, mit einem Wäscher (3) verbunden ist, wobei zwischen dem Ofen (1) und dem Wäscher (3) eine Erwärmungseinheit (10) zum Umwandeln von Kohlendioxid in Kohlenmonoxid vorgesehen ist, dass in dem Wäscher (3) Sprühdüsen (4) für das Einsprühen von mit Natriumformiat gesättigter Natronlauge münden und dass am unteren Ende des Wäschers (3) ein Sedimentationsraum (6) für ausgefälltes Natriumformiat vorgesehen ist.

10. Anlage nach Anspruch 9, **dadurch gekennzeichnet, dass** vom unteren Ende (6) des Wäschers (3) eine Leitung (11) zum Rückführen von wässriger Natronlauge, die mit Natriumformiat gesättigt ist, in den Vorratsbehälter (5) ausgeht.

11. Anlage nach Anspruch 9 oder 10, **dadurch gekennzeichnet, dass** vom oberen Ende des Wäschers (3) eine Leitung (9), die zum Ofen (1) führt, ausgeht.

## Claims

1. Process for the thermal treatment of carbonatic raw materials, in which carbon dioxide is released (calcination), particularly for the production of cement and/or burnt lime, wherein carbon dioxide accumulating is converted into a compound that is hardly soluble in water, particularly a hardly soluble salt, **characterized in that** carbon dioxide is converted into carbon monoxide, and **in that** carbon monoxide is initially converted into a formate and this formate is then converted into an oxalate.

2. Process according to claim 1, **characterized in that** carbon monoxide is converted into sodium formate by reacting with sodium hydroxide.

3. Process according to claim 2, **characterized in that** sodium formate is converted into sodium oxalate and hydrogen by being thermally treated.

4. Process according to one of claims 1 to 3, **characterized in that** carbon monoxide is brought in contact with sodium hydroxide, which is saturated with sodium formate, in order to produce sodium formate.

5. Process according to claim 4, **characterized in that** the sodium formate, which precipitates from the sodium hydroxide saturated with sodium formate and was produced due to the reaction of carbon monoxide with sodium hydroxide, is extracted and the remaining sodium hydroxide saturated with sodium formate is recirculated.

6. Process according to one of claims 1 to 5, **characterized in that** carbon monoxide is produced during the thermal treatment of carbonatic raw materials.

7. Process according to one of claims 1 to 6, **characterized in that** carbon dioxide is produced during the thermal treatment of carbonatic raw materials, and **in that** the produced carbon dioxide is converted into carbon monoxide in an afterburning stage.

8. Process according to one of claims 1 to 7, **characterized in that** carbon monoxide is brought in contact with sodium hydroxide, which is saturated with sodium formate, in a scrubber.

9. Plant for the thermal treatment of carbonatic raw materials, particularly for the production of cement and burnt lime, **characterized in that** the outlet (2) of a furnace (1) for the thermal treatment of carbonatic raw materials, particularly a rotary drum furnace for the production of cement and/or burnt lime, is connected to a scrubber (3), wherein a heating unit (10) for converting carbon dioxide into carbon monoxide is provided between the furnace (1) and the scrubber (3), **in that** spray nozzles (4) for spraying sodium hydroxide, which is saturated with sodium formate, lead into the scrubber (3), and **in that** a sedimentation chamber (6) for precipitated sodium formate is provided on the lower end of the scrubber (3).

10. Plant according to claim 9, **characterized in that** a line (11) for returning aqueous sodium hydroxide, which is saturated with sodium formate, into the reservoir (5) originates from the lower end (6) of the scrubber (3).

11. Plant according to claim 9 or 10, **characterized in that** a line (9) leading to the furnace (1) originates from the upper end of the scrubber (3).

## Revendications

1. Procédé de traitement thermique de matières premières contenant du carbonate, dans lequel du dioxyde de carbone se forme (calcination), en particulier pour la production de ciment et/ou de chaux vive, dans lequel le dioxyde de carbone incident est transformé en un composé difficilement soluble dans l'eau, en particulier un sel difficilement soluble dans l'eau, **caractérisé en ce que** le dioxyde de carbone est transformé en monoxyde de carbone et que le monoxyde de carbone est d'abord transformé en un formiate et celui-ci ensuite en un oxalate.

2. Procédé selon la revendication 1, **caractérisé en ce que** le monoxyde de carbone est transformé en formiate de sodium par transformation avec de la lessive de soude caustique.

3. Procédé selon la revendication 2, **caractérisé en ce que** le formiate de sodium est transformé par traitement thermique en oxalate de sodium et hydrogène.

4. Procédé selon une des revendications 1 à 3, **caractérisé en ce que** le monoxyde de carbone, pour former du formiate de sodium, est mis en contact avec de la lessive de soude caustique qui est saturée avec du formiate de sodium.

5. Procédé selon la revendication 4, **caractérisé en ce que** le formiate de sodium précipité hors de la lessive de soude caustique saturée avec du formiate de sodium et qui a été constitué par conversion d'e monoxyde de carbone avec de la lessive de soude caustique est isolé et que la lessive de soude caustique résiduelle saturée avec du formiate de sodium est remise dans le circuit.

6. Procédé selon une des revendications 1 à 5, **caractérisé en ce que** le traitement thermique des matières premières contenant du carbonate est réalisé en formant du monoxyde de carbone.

7. Procédé selon une des revendications 1 à 6, **caractérisé en ce que** le traitement thermique de matières premières contenant du carbonate est réalisé en formant du dioxyde de carbone et que le dioxyde de carbone formé est transformé dans une étape de postcombustion en monoxyde de carbone.

8. Procédé selon une des revendications 1 à 7, **caractérisé en ce que** le monoxyde de carbone est mis en contact avec une solution d'hydroxyde de sodium saturée avec du formiate de sodium dans un épurateur.

9. Installation de traitement thermique de matières premières contenant du carbonate, en particulier pour la production de ciment et de chaux vive, **caractérisée en ce que** la sortie (2) d'un four (1) de traitement thermique de matières premières contenant du carbonate, en particulier d'un four tubulaire rotatif pour la production de ciment et/ou de chaux vive, est reliée à un épurateur (3) et qu'il est prévu, entre le four (1) et l'épurateur (3), une unité de chauffage (10) pour transformer le dioxyde de carbone en monoxyde de carbone, que des buses de pulvérisation (4) pour la pulvérisation de lessive de soude caustique saturée avec du formiate de sodium (3) débouchent dans l'épurateur (3) et qu'il est prévu, à l'extrémité inférieure de l'épurateur, une cellule de sédimentation (6) pour le formiate de sodium précipité.

10. Installation selon la revendication 9, **caractérisée en ce qu'**une conduite (11) de recyclage de lessive de soude caustique aqueuse qui est saturée avec du formiate de sodium et partant de l'extrémité inférieure (6) de l'épurateur (3) va jusque dans le réservoir (5).

11. Installation selon la revendication 9 ou 10, **caractérisée en ce qu'**une conduite (9) qui mène au four (1) part de l'extrémité supérieure de l'épurateur (3).
